Europäisches Patentamt

European Patent Office

Office européen des brevets

(11) Veröffentlichungsnummer: **0 394 616**
**A2**

(12) **EUROPÄISCHE PATENTANMELDUNG**

(21) Anmeldenummer: **90101545.3**

(22) Anmeldetag: **26.01.90**

(51) Int. Cl.⁵: **F27B 9/30, F27B 9/40, F27D 7/04**

Ein Antrag gemäss Regel 88 EPÜ auf Berichtigung in Patentanspruch 1 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **27.04.89 DE 3913887**
**07.06.89 DE 3918585**

(43) Veröffentlichungstag der Anmeldung:
**31.10.90 Patentblatt 90/44**

(84) Benannte Vertragsstaaten:

**AT BE CH DE DK ES FR GB IT LI NL**

(71) Anmelder: **Nieberding, Jean-Louis Hermann**
**Frepert 82**
**B-4729 Hauset(BE)**

(72) Erfinder: **Nieberding, Jean-Louis Hermann**
**Frepert 82**
**B-4729 Hauset(BE)**

(74) Vertreter: **von Creytz, Dietrich, Dipl.-Phys.**
**Tannenweg 25**
**D-5144 Wegberg(DE)**

(54) **Verfahren zum Betrieb eines Durchgangsofens.**

(57) Beim Betrieb eines zum Brennen von keramischen Formlingen vorgesehenen, als Tunnelofen ausgebildeten Durchgangsofens, in welchem auf einer geraden Linie eine Vorwärmzone, eine Brennzone und eine Kühlzone aufeinanderfolgen, kann Energie gespart und die Umwelt (ohne wesentlichen Aufwand für Luftfilter) geschont werden, wenn im Gegenstrom in der Kühlzone des Ofens erhitzte Luft vor Eintreffen in der Brennzone aus dem Ofeninnern abgezogen, über einen ersten Bypass an der Brennzone vorbei in die Vorwärmzone geblasen und von dort aus nach Abkühlung an den in der Vorwärmzone transportierten Rohlingen über einen zweiten Bypass wieder vorbei an der Brennzone zur Kühlzone zurückgeleitet wird.

Fig.1

EP 0 394 616 A2

Die Erfindung betrifft ein Verfahren zum Betrieb eines Durchgangsofens zum Brennen keramischer Formlinge, vorzugsweise Ziegel, bei dem die Formlinge als Rohlinge in einer Vorwärmzone aufgeheizt, in einer Brennzone gebrannt und die gebrannten Formlinge in einer Kühlzone im Gegenstrom mit Luft gekühlt werden und bei dem von der Kühlzone stammende erhitzte Luft als Heizmedium für in die Vorwärmzone eingebrachte Rohlinge verwendet wird. Die Erfindung betrifft ferner eine Vorrichtung zum Betrieb eines Durchgangsofens, insbesondere Tunnelofens.

In Ziegelein werden zum Brennen der Ziegel sogenannte Tunnelöfen als Durchgangsöfen eingesetzt, in denen auf einer geraden Strecke von beispielsweise 100 bis 200 m eine Vorwärmzone, eine Brennzone und eine Kühlzone, die gemeinsam einen geraden - also umlenkungsfreien - Tunnel bilden, aufeinander folgen. Das zu brennende Gut wird nach Durchlauf eines Trockners auf einzelnen, in ununterbrochener Reihe aufeinanderfolgenden Wagen in die Vorwärmzone eingefahren, dort allmählich so weit aufgeheizt, daß das keramische Material, ohne zu reißen, gebrannt werden kann. In der Brennzone herrschen Temperaturen von 1.000° C und mehr. Nach dem Brennen werden die gebrannten Formlinge in der Kühlzone wieder allmählich abgekühlt, bis sie eine Temperatur von etwa 120° C haben und den Tunnel verlassen.

Zum Aufheizen der Brennzone werden bevorzugt Gasbrenner verwendet. Zum Kühlen in der Kühlzone wird ein Luftstrom am Ausgang der Kühlzone in den Tunnel eingeblasen. Diese Kühlluft strömt entgegen der Transportrichtung der Formlinge durch den ganzen Tunnel. Dabei wird die Kühlluft allmählich schon in der Kühlzone aufgewärmt und beim Durchströmen der Brennzone auf die dort herrschende hohe Temperatur gebracht. Diese heiße Luft gelangt dann in die Vorwärmzone, wo sie das in Richtung der Brennzone bewegte keramische Material ebenfalls im Gegenstrom durchfließt. Durch das Aufwärmen an dem keramischen Material kühlt die Luft allmählich wieder ab, bis sie über einen am Eingang der Vorwärmzone angeordneten Kamin abgezogen wird.

Um den Gegenluftstrom aufrechtzuerhalten, ist es erforderlich, ein Druckgefälle von der Ausfahrt der Kühlzone bis zur Einfahrt der Vorwärmzone einzustellen. Da die zum Kühlen und anschließend zum Aufheizen verwendete Luft in dem herkömmlichen Tunnelofen nur einmal verwendet wird, sind zum Brennen von 1 kg keramischen Material zirka 3 kg Luft erforderlich. Der Energierverlust und die Belastung der Umwelt sind entsprechend hoch. Wenn die über den Kamin abgeblasenen Gase gereinigt werden müssen, werden der Abluftmenge entsprechend große Filteranlagen erforderlich.

Es ist möglich, einen Teil der Kühlluft aus der Kühlzone und einen Teil der über dem Kamin des Tunnelofens abgeblasenen Energie zurückzugewinnen und an anderer Stelle einzusetzen. In Ziegeleien wird diese Energie im allgemeinen zum Beheizen von Trocknern für frisch geformte Ziegel verwendet.

Aus der am 26. Juni 1952 ausgelegten deutschen Patentanmeldung S 21 776 (Anmeldetag: 02.02.1951) ist ein Durchgangsofen bekannt, in welchem in Transportrichtung des zu behandelnden Gutes eine Vorwärmzone, eine Glühzone und eine Kühlzone aufeinanderfolgen. Zum effektiven Kühlen des Gutes in der Kühlzone und zum Anwärmen des Gutes in der Vorwärmzone wird ein Luftstrom entgegen der Transportrichtung durch den Ofen geblasen. Um dabei der Glühzone nicht unnötig Wärme zu entziehen, wird der Luftstrom im wesentlichen direkt - als unter Umgehung der Glühzone - von der Kühlzone zur Vorwärmzone geblasen. Nach den Angaben im Bekannten sind für diese Umgehung der Glühzone bei einem üblichen Durchgangsofen mit durch den Ofen hindurch gleichbleibender Förderrichtung vor und hinter der Glühzone schleusenartige Abdeckungen einzubauen. Als Alternative zu derartig aufwendigen Schleusensystemen wird im Bekannten ferner vorgeschlagen, die Förderrichtung im Bereich der Glühzone um 180° umzulenken und die Kühlzone und die Vorwärmzone unmittelbar nebeneinander liegend anzuordnen und einen direkten Übergang für die aufgeheizte Luft von der Kühlzone zur Vorwärmzone vorzusehen. Eine derartige Umlenkung tonnenschwerer Ziegelwagen in der mehr als 1.000° C aufweisenden Brennzone des Tunnelofens eines keramischen Betriebs dürfte im Dauerbetrieb mit wirtschaftlich vertretbaren Mitteln nicht realisierbar sein.

Der Erfindung liegt bei einem Durchgangsofen, in welchem Vorwärmzone, Brennzone und Kühlzone auf einer Geraden aufeinanderfolgen, die Aufgabe zugrunde, den Aufwand für Energie und Abgasreinigung ohne das Erfordernis eines energetischen Zusammenwirkens mit anderen Energieverbrauchern deutlich zu vermindern, die zum Betrieb erforderliche und im Kamin zu reinigende Luftmenge wesentlich zu reduzieren und innerhalb des Ofens einen Energieaustausch zwischen Kühlzone und Vorwärmzone zu ermöglichen, ohne daß die dazu bisher erforderlichen großen Luftmengen mittelbar oder unmittelbar aus der Vorwärmzone wieder über den Kamin abgeblasen werden müßten.

Die erfindungsgemäße Lösung wird für das eingangs genannte Verfahren im Patentanspruch 1 beschrieben. Durch die Erfindung wird ein Luftkreislauf geschaffen, der, in ein und demselben Tunnelofen, ohne dessen Brennzone wesentlich zu berühren, einen unmittelbaren Wärmeastausch zwischen Vorwärmzone und Kühlzone gewährleistet.

Wenn hier der Ausdruck "wesentlich" gebraucht wird, so geschieht das deswegen, weil der Durchgang zwischen der Brennzone und den beiden benachbarten Zonen völlig geöffnet bleibt und deshalb ein gewisser Gasaustausch zwischen der Brennzone und der Vorwärmezone bzw. Kühlzone unvermeidlich ist. Die Wirkung der Erfindung wird also nicht beeinträchtigt, wenn ein gewisser kleiner Teil der Luft aus den Nachbarzonen in den Brennzone eintritt bzw. durch die Brennzone hindurchfließt. Es ist schon viel gewonnen, wenn der Hauptteil der Luft auf dem Wege von der Kühlzone zur Vorwärmzone und umgekehrt die Brennzone umgeht.

Im vorstehenden Sinne umfaßt die Erfindung auch den Fall, daß die Brennzone gezielt in der einen oder anderen Richtung, z.B. mit Hilfe stufenlos regelbarer Kreisluftventilatoren, durchströmt werden soll. Es handelt sich dann um ein kontrolliertes Ungleichgewicht der im folgenden eingehend beschriebenen, im Kreislauf um die Brennzone herum bewegten Luftmassen. Ein solches kontrolliertes Ungleichgewicht kann beispielsweise Vorteile bringen, wenn eine vorgegebene Temperaturkurve im Tunnelofen exakt eingestellt werden soll oder wenn das Hauptfeuer der Brennzone in der einen oder anderen Richtung verlagert werden soll. In jedem Falle bleiben die durch die Brennzone hindurchgeführten Luftmassen klein gegenüber den im Kreislauf um die Brennzone herumbewegten Luftmassen. Das erfindungsgemäß angestrebte Ziel des Energiesparens und der gedrosselten, gereinigten Abgasmenge wird hierdurch praktisch nicht berührt. Wegen des auch in den beschriebenen Sonderfällen relativ kleinen Luftaustausches mit der Brennzone wird im folgenden nur noch auf die wesentlichen Merkmale der Erfindung, also auf den Betrieb der Brennzone ohne fortdauernde Durchzugsluft als absperrungsfreie Brennkammer, Bezug genommen.

Eine bevorzugte Ausgestaltung der Erfindung besteht darin, daß die Gegenstrom in der Kühlzone erhitzte Luft vor Eintreffen in der Brennzone aus dem Tunnel abgezogen, über einen ersten Bypass an der Brennzone vorbeigeleitet sowie unmittelbar in die Vorwärmzone eingeblasen und von dort aus nach Abkühlung an den Rohlingen über einen zweiten Bypass wiederum an der Brennzone vorbei zur Kühlzone zurückgeleitet wird.

Mit Hilfe der über ein Ringrohrsystem im Kreislauf durch Vorwärmzone und Kühlzone geblasenen Luft läßt sich eine weitgehend vollständige Rekuperation der Wärme bereits innerhalb der Tunnelofenanlage erreichen. Da die Luft im Kreislauf strömt, wird sie ständig einerseits für den Wärmetransport von der Kühlzone zur Vorwärmzone und andererseits für den Kältetransport von der Vorwärmzone zur Kühlzone wiederverwendet; es ergibt sich in dieser Beziehung eine bis auf Undichtheiten und gewisse Reinigungserfordernisse geschlossenes Ringluftsystem.

Da die Brennzone bei erfindungsgemäßer Verfahrensweise wie das Auge des Zyklons von dem in der Kühlzone und in der Vorwärmzone fließenden Luftstrom umgangen wird, arbeitet sie nahezu nach dem Kammerofenprinzip, ohne daß Wände bzw. Sperren am Eingang oder Ausgang der Brennzone vorhanden wären. Da die in der Kühlzone erhitzte Luft vor dem Eintreffen in der Brennzone über einen Bypass abgesaugt wird, stellt sich in der Brennzone - unter anderem auch wegen der dort für an den Brennern (nach üblicher Decken- und/oder Seitenbefeuerung) für den Verbrennungsvorgang eingeblasenen Luft/Gasmengen - ein gewisser Überdruck ein, der ebenfalls ein Weiterfließen der aus der Kühlzone im Gegenstrom kommenden Luft über die Brennzone hinaus im wesentlichen ausschließt.

Darüber hinaus setzt sich in der aus Vor-, Haupt- und Nachfeuer bestehenden Brennzone ebenfalls ein örtlicher bzw. restlicher Gegenstrom in Richtung Abgaskamin in Bewegung, so daß sich ein Wärmeaustausch zwischen Vorfeuer, Hauptfeuer sowie Nachfeuer und - je nach Anordnung des Kamins - eine nach oben korrigierte Temperatur der Vorwärmzone als Ausgleich für einen eventuellen Leistungsabfall in der über die Bypässe erfolgenden Wärmeübertragungergeben.

· Gemäß einer weiteren Ausgestaltung der Erfindung wird die über den ersten Bypass zur Vorwärmzone geleitete Luft in der Vorwärmzone im Gegenstrom zu den Rohlingen zum Eingang des zweiten Bypasses geführt. Dadurch wird erreicht, daß trotz Überbrückung der Brennzone die zum Aufheizen verwendete Luft auch in der Vorwärmzone - in an sich herkömmlicher Weise - im Gegenstrom zur Transportrichtung der Rohlinge fließt.

In ähnlicher Weise ist es gemäß noch weiterer Erfindung günstig, wenn die über den zweiten Bypass von der Vorwärmzone zur Kühlzone geleitete Luft in der Kühlzone im Gegenstrom zum Eingang des ersten Bypasses geführt wird. Auch in diesem Fall wird also - in an sich herkömmlicher Weise - innerhalb der Kühlzone der Gegenstrom zur Transportrichtung des gebrannten Materials aufrechterhalten.

Um die erfindungsgemäßen Luftströmungen nicht durch Fremdluft zu verfälschen, wird weiterhin vorgesehen, sowohl an der Einfahrt der Vorwärmzone als auch an der Ausfahrt der Kühlzone eine Schleuse - also nicht nur eine übliche Tür -anzubringen, die einen freien Luftaustausch mit der Umgebung im wesentlichen ausschließt. Innerhalb des Tunnelofens herrschen dann im übrigen - abgesehen vom Bereich der Brennzone - ganz ähnliche Verhältnisse wie bei einem herkömmlichen Ofen. Die entscheidenden Unterschiede gegenüber dem Stand der Technik bestehen vor allem darin, daß die Luft aus der Kühlzone unter Umgehung der Brennzone zur Vorwärmzone transportiert wird und daß die aus der Vorwärmzone abzublasende Luft nicht in die Atmosphäre geblasen sondern unmittelbar zurück zur Kühlzone gebracht wird.

Eine weitere vorteilhafte Ausgestaltung der Erfindung besteht darin, daß in konzentrischen Luftkreisläufen Luft aus einem kühleren, auf den Quarzsprung der Formlinge folgenden Bereich der Kühlzone in einen kühleren Eingangsbereich der Vorwärmzone und zugleich Luft aus einem wärmeren, vor dem Quarzsprung der Formlinge liegenden Bereich der Kühlzone in einen an die Brennzone angrenzenden wärmeren Bereich der Vorwärmzone gebracht und jeweils zurückgeleitet wird. Durch Verwendung solcher konzentrischer Luftkreisläufe wird erreicht, daß die aus dem kühleren Bereich der Kühlzone stammende Luft zu den noch relativ frischen, kühleren Rohlingen in der Nähe des Eingangs der Vorwärmzone gelangt. Die Rohlinge werden dann nicht unzulässig schnell erwärmt, da in jedem Ofenbereich die Temperaturdifferenz zwischen dem Medium Luft und dem Brenngut vertretbar ist. Da ferner die Luftkreisläufe eine Aufteilung der Ofenlänge in verschiedene Abschnitte mit gegenüber dem Stand der Technik verringerten Druckdifferenzen zur Folge haben, wird viel weniger sogenannte Falschluft, z. B. auf die Radachsen der Wagen geblasene Kühlluft, in den Tunnel eingezogen.

Ein vollständiges Aufheizen der Rohlinge zur Vorbereitung des Einlaufs in die Brennzone kann erreicht werden, wenn aus dem Bereich unmittelbar hinter (in Transportrichtung) der Brennzone heiße Luft in den Bereich der Vorwärmzone unmittelbar vor (in Transportrichtung) der Brennzone eingeblasen wird. Dadurch werden zwei Vorteile erreicht: erstens ist es möglich, auch die Quarzsprungzone, die innerhalb der Kühlzone liegt, aus dem Luftströmungssystem auszunehmen; dazu wird vorgesehen, in den äußeren Luftkreislauf der konzentrischen Kreisläufe nur den kühleren Bereich ( bis ca. 550° C) hinter der Quarzsprungzone einzubeziehen und den Bereich der Kühlzone (ca 600 bis 850° C) zwischen Quarzsprungzone und Brennzone für den inneren Luftkreislauf vorzusehen; zweitens werden in der Vorwärmzone zwei Aufheizbereiche in Transportrichtung nacheinander geschaltet, wobei der in Transportrichtung erste Aufheizbereich mit relativ kühler Luft (ca. 500 bis 550° C) und der in Transportrichtung zweite Aufheizbereich mit Luft nahezu der Temperatur (ca. 800 bis 850° C) der Brennzone beaufschlagt wird.

Gemäß weiterer Erfindung wird der jeweilige Luftkreislauf durch die Kühlzone und die Vorwärmzone um die Brennzone herum mit Hilfe von Ventilatoren kontinuierlich und im wesentlichen abgeschlossen von der Umgebungsluft so lange aufrechterhalten, bis in der Vorwärmzone aus den zunächst noch feuchten Formlingen ausgeschweltes, brennbares Gas in dem Luftkreislauf zu einem brennbaren Luft/Gas-Gemisch angereichert ist, dieses Gemisch wird dann - vorzugsweise unter Hinzufügung von Frischluft - in regelmäßigen Zeitabständen oder nach Erreichen einer gewissen Anreicherung gezündet. Erst die nach dem Zünden ausgebrannten Gase werden über den Kamin des Tunnelofens abgeblasen. Dadurch wird erreicht, daß in dem Brenngut befindliche Brennstoffe, z.B. bitumenartige Einschlüsse; organische Stoffe, Zuschlagstoffe, wie Sägemehl, Styropor, Kohleschlamm; oder sonstige ausgewählte Abfälle, welche dem Brenngut, insbesondere Tonmaterial, zugegeben werden, aus den Formlingen ausgegast und in der im Kreislauf transportierten Luft gesammelt werden, bis sie noch im Kreislauf verbrannt werden können. In den Kamin des Tunnelofens soll dann lediglich ausgebranntes Gas gelangen. Auf diese Weise wird sogar die in den Schwelgases enthaltene Energie zum Aufheizen des Ofens eingesetzt. Diese Betriebsweise mit im Kreislauf um die Brennzone herumgeführter Umluft, die in der Kühlzone kühlt und in der Vorwärmzone aufheizt, trägt also gleichzeitig zur Energieersparnis und zur Luftreinhaltung bei, weil nur perfekt ausgebranntes Gas zum Kamin gelangt.

Für den Durchgangsofen mit auf einer geraden Linie in einem einzigen Tunnel aufeinanderfolgender Vorwärm-, Brenn- und Kühlzone ist die erfindungsgemäße Lösung gekennzeichnet durch wenigstens einen außen um die Brennzone herumgeführten, die Kühlzone und die Vorwärmzone jeweils im Gegenstrom durchfließenden Luftkreislauf. Diese druckmäßige Trennung der Zonen des Tunnelofens soll bewirkt werden durch in den Luftkreislauf außerhalb des Tunnels eingebaute Ventilatoren. Vorzugsweise enthält jeder Luftkreislauf zwei Ventilatoren, der eine Ventilator saugt aus der Kühlzone ab und drückt in die Vorwärmzone, der andere Ventilator saugt aus der Vorwärmzone ab und drückt in die Kühlzone. Dadurch werden in der Vorwärmzone und in der Kühlzone Druckverhältnisse eingestellt, die die druckmäßige Trennung der einzelnen Zonen bewirken.

Gemäß weiterer Erfindung besitzt der Luftkreislauf zwei die Brennzone überbrückende Bypässe, nämlich einen von der Kühlzone zur Vorwärmzone führenden ersten Bypass, als Rohrleitung, und einen von der Vorwärmzone zur Kühlzone führenden zweiten Bypass, ebenfalls als Rohrleitung; zum Einstellen des erwünschten Gegenstroms in Kühlzone und Vorwärmzone werden Eingang und Ausgang des ersten Bypasses beide näher an der Brennzone angeordnet als Eingang und Ausgang des zweiten Bypasses.

Bevorzugt wird eine Anordnung, bei der der eine Bypass an der einen Längsseite oder an der Decke und der andere Bypass an der anderen, gegenüberliegenden Längsseite oder ebenfalls an der Decke des geraden Durchgangs bzw. Tunnels ansetzt. Im allgemeinen wird aus konstruktiven und räumlichen Gründen ein Aufliegen der Bypass-Leitungen auf der Tunneldecke bevorzugt, wenn jedoch die Lei tungen an den Seitenwänden angebracht werden sollen und wenn, wie oben angegeben, zwei konzentrische Luftkreisläufe erwünscht werden, befinden sich zwei erste Bypässe der vorgenannten Art auf der einen Längsseite und zwei zweite Bypässe der vorgenannten Art auf der anderen Längsseite des Tunnels. Die Ein- und Ausgänge der einzelnen Bypässe werden in der Tunnelwand oder -decke so angeordnet, daß einerseits die Brennzone und Quarzsprungzone aus dem Kühl-bzw. Heizluftstrom ausgenommen wird und daß in der Vorwärmzone zwei aufeinanderfolgende Aufheizbereiche im wesentlichen getrennt voneinander existieren können.

Bei einem in Richtung quer zur Transportrichtung relativ breiten geraden Durchgang bzw. Tunnel kann es gemäß noch weiterer Erfindung günstig sein, wenn der erste und zweite Bypass wenigstens eines der Kühlkreisläufe Anschlüsse jeweils zweifach und etwa spiegelbildlich auf den einander gegenüberliegenden Tunnellängsseiten, insbesondere wahlweise zu beaufschlagen, besitzen. Wenn dann die beiden Paare von Bypass-Leitungen jedes Luftkreislaufs periodisch, z. B. durch Inbetriebsetzen oder Abbremsen der zugeordneten Ventilatoren, zum Erzeugen des Ringluftstroms verwendet werden, gelangt die Luft einmal von rechts nach links und einmal von links nach rechts - dazwischen jeweils ein Stück in Längsrichtung - durch den Tunnel, so daß eine gleichmäßige Beaufschlagung des zu behandelnden Guts erreicht wird und tote Winkel vermieden werden.

Für den Betrieb der beschriebenen Kreise und Bypässe und für eine minimale Luftumwälzung ist es - wie gesagt - günstig, wenn sowohl an der Einfahrt der Vorwärmzone als auch an der Ausfahrt der Kühlzone eine Schleuse vorgesehen wird. Dann ist es möglich, einen Großteil der in dem Tunnel vorhandenen Luft ständig -auch während der Schubzeiten der Wagen - zwischen Kühlzone und Vorwärmzone umzuwälzen, so daß nicht nur das Aufheizen zusätzlicher Luftmengen gespart wird sondern reduziert wird mit der Folge geringerer Kosten für die Abgasreinigung.

In einer Ausgestaltung der Erfindung wird die im Gegenstrom in der Kühlzone er hitzte Luft wie beschrieben vor dem Eintreffen in der Brennzone aus dem Tunnel abgezogen aber nicht kontinuierlich sondern impulsweise oder periodisch (siehe unten) in die Vorwärmzone eingeblasen. Zugleich, in gleichem Takt und Umfang, wird die im Gegenstrom in der Vorwärmzone gekühlte Luft aus dem Tunnel abgezogen und impulsweise oder periodisch in die Kühlzone eingeblasen, damit sich ein Gegenstrom durch die Brennzone nicht ausbilden kann. Durch diesen Impulsbetrieb wird erreicht, daß auch die noch relativ kühlen Rohlinge im Eingangsbereich der Vorwärmzone mit der vollen Hitze der kurz vor der Brennzone aus der Kühlzone herausgezogenen Luft in Berührung gebracht werden können. Das impulsweise Einblasen ermöglicht es nämlich dem Material, sich nach jedem Impuls gewissermaßen zu erholen, so daß Brüche durch zu schnelles Aufheizen nicht auftreten. Impulsweises Beaufschlagen bedeutet das stoßweise Einblasen von Luftimpulsen. Periodisches Beaufschlagen meint eine in sich kontinuierliche Belüftung abwechselnd aus verschiedenen Richtungen, z. B. abwechselnd von rechts und links sowie unter anderem ein zeitweises Abschalten "innerer" Bypass-Leitungen, so daß nur noch ein einziger großer Luftkreis durch die ganze Kühlzone und die ganze Vorwärmzone existiert und im kühleren Teilstrom angesammelte Schwelgase durch den Herantransport bis in die Nähe der Brennzone abbrennen können.

Durch die Erfindung wird die Brennzone eines Durchgangs- bzw. Tunnelofens erstmalig aus jeglichem störenden Fremdluftdurchzug ausgeklammert. Wie "im Auge des Zyklons" herrscht in der Brennzone die Ruhe, die letztlich für den wesentlichen Prozeß des Tunnelofens, nämlich dem Brennprozeß, erforderlich ist. Mit allen Vorteilen eines Kammerofens aber ohne die horrende Energieverschwendung aller bestehenden Kammeröfen kann erfindungsgemäß in einfacher Weise jede Art von Brennprozeß ausgeführt werden. Hierzu gehören oxidierende oder reduzierende Prozesse (auch wechselweise), Prozesse mit Über- oder Unterdruck, Prozesse mit Glasur, insbesondere Salz-Glasur, ohne die Gefahr eines unerwünschten Abtransports der ätzenden Gase in den Gasen gegenüber empfindliche Ofenbereiche.

Anhand der schematischen Zeichnung eines Ausführungsbeispiels werden weitere Einzelheiten der Erfindung erläutert. Es zeigen:

Fig. 1 eine Draufsicht auf einen Tunnelofen; und

Fig. 2 einen senkrechten Querschnitt - teilweise als Vorderansicht - des Tunnelofens.

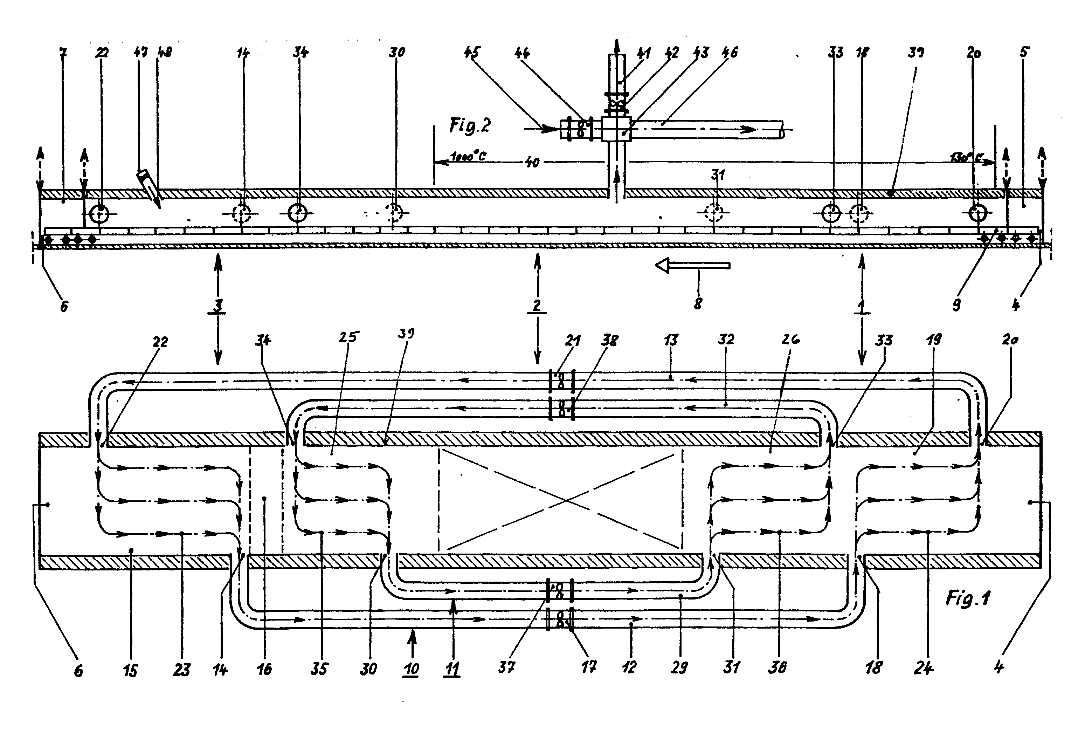

Der im folgenden als Tunnelofen bezeichnete gerade Durchgangsofen nach Fig. 1 und 2 besteht aus einer Vorwärmzone 1, einer Brennzone 2 und einer Kühlzone 3. An der Einfahrt 4 der Vorwärmzone 1 wird eine Schleuse 5 vorgesehen. An der Ausfahrt 6 der Kühlzone 3 befindet sich ebenfalls eine Schleuse 7. In Transportrichtung 8 des Tunnelofens wird von der Einfahrt 4 zur Ausfahrt 6 ein Zug von dicht aufeinander folgenden Wagen 9 mit darauf gestapelten Formlingen gefahren.

Erfindungsgemäß wird mindestens ein die Brennzone 2 umgehender Luftkreislauf zwischen Vorwärmzone 1 und Kühlzone 3 vorgesehen. Im Ausführungsbeispiel werden zwei jeweils insgesamt mit 10 und 11 bezeichnete Luftkreisläufe dargestellt. Der äußere Luftkreislauf 10 besteht aus einem ersten Bypass 12 und einem zweiten Bypass 13. Die zugehörigen Rohrleitungen und Ventilatorenfinden - wie auch bei den übrigen Bypässen - zweckmäßig auf der Decke des Tunnels Platz.

Der Eingang 14 des ersten Bypasses 12 geht aus von einem kühleren Bereich 15 der Kühlzone 3 an einer Stelle, an der eine in der Kühlzone vorhandene Quarzsprungzone 16 endet. Der Bypass 12 besitzt einen Ventilator 17 und transportiert die am Eingang 14 angesaugte Luft zum Ausgang 18 in einen kühleren Bereich 19 der Vorwärmzone 1. Der Ausgang 18 wird an eine Stelle der Vorwärmzone 1 gelegt, an der die dort hinfließende Luft ausreichend warm, aber nicht zu heiß für das an dieser Stelle befindliche Rohmaterial ist.

Der zweite Bypass 13 des ersten Kühlluftkreislaufs 10 geht an seinem Eingang 20 aus von einer Position angrenzend an die Schleuse 5 an der Einfahrt 4 und führt über einen Ventilator 21 zu dem kühleren Bereich 15 der Kühlzone 3, angrenzend an die dortige Schleuse 7. Von dem Ausgang 22 des zweiten Bypasses 13 zum Eingang 14 des ersten Bypasses 12 fließt die Luft im Gegenstrom 23 durch den kühleren Bereich 15 der Kühlzone 3. In ähnlicher Weise fließt die Luft vom Ausgang 18 des ersten Bypasses 12 zum Eingang 20 des zweiten Bypasses 13 im Gegenstrom 24 durch das frisch in den Tunnel eingefahrene, zu brennende Material der Vorwärmzone 1.

Der innere Luftkreislauf 11 gemäß Fig. 1 und 2 verbindet die beiderseits der Brennzone 2 liegenden, wärmeren Bereich 25 und 26 von Kühlzone 3 bzw. Vorwärmzone 1 und besitzt an seinem ersten Bypass 29 einen an die Brennzone 2 angrenzenden Eingang 30 und einen ebenfalls in der Nähe der Brennzone mündenden Ausgang 31. Der zugehörige zweite Bypass 32 des inneren Luftkreislaufs 11 besitzt einen Eingang 33 und einen Ausgang 34. Der Eingang 33 liegt in Transportrichtung 8 etwas hinter dem Ausgang 18 des ersten Bypasses 12 des Luftkreislaufs 10, während der Ausgang 34 des zweiten Bypasses 32 in Transportrichtung 8 kurz vor der Quarzsprungzone 16 in die Kühlzone 3 mündet. Durch diese Anordnung wird ebenfalls erreicht, daß sowohl zwischen dem Ausgang 34 und dem Eingang 30 als auch zwischen dem Ausgang 31 und dem Eingang 33 eine Luftströmung - einmal Kühlluft, einmal Heizluft - im Gegenstrom 35, 36 zu dem zu brennenden Material fließt. Auch die Bypässe 29 und 32 des inneren Luftkreislaufs 11 werden mit Ventilatoren 37 bzw. 38 ausgestattet.

Der insgesamt mit 39 bezeichnete Tunnel kann für den Rauchgasabzug an irgendeiner Stelle des mit 40 bezeichneten Kaminbereichs von Vorwärmzone 1 und Brennzone 2 an einen Kamin 41 angeschlossen werden. Der Kamin 41 enthält im Ausführungsbeispiel einen druckgeregelten Rauchgas-Ventilator 42, einen Wärmetauscher 43 (für den Fall heißer Abgase) und nicht gezeichnete Abgasfilter. Die Stelle des Rauchgasabzugs und im Prinzip auch der Standort des Kamins 41, das heißt insbesondere für den vorzugsweise drehzahlgeregelten oder mit einer Regelklappe versehenen Ventilator 42, können frei je nach der gewünschten Temperatur der Abgase, ferner je nach Brennmittel, Brenngut oder Umweltauflagen gewählt werden. Bei Betrieb des Tunnelofens im wesentlichen mit Umluft werden in Normalfall 0,15 bis 0,3 kg Abgas pro kg reinem Tonmaterial der gebrannten Waren anfallen. Die Abgasmenge beträgt im ungünstigsten Fall nur etwa 20 bis etwa 25 % der Abgasmenge der verfahrenstechnisch am günstigsten ausgebildeten bekannten Tunnelöfen.

Hiernach besteht ein wesentlicher Vorteil der Erfindung darin, daß der Kamin nicht nur an beliebiger Stelle längs des Ofens anzuschließen ist - (eventuell auch außerhalb des Kaminbereichs 40) bevorzugt wird der Bereich von Vorwärmzone und Brennzone - sondern daß der Anschluß des Kamins den individuellen Eigenschaften des jeweiligen Brennguts und/oder der jeweiligen Verfahrensführung angepaßt, auch bei Betrieb, längs des Ofens verschiebbar auszubilden ist. In diesem Sinne kann es günstig sein, den Kamin-Anschluß des Tunnelofens wahlweise auf verschiedene Positionen auf der Ofenlänge schaltbar auszugestalten. Eine Änderung der Ankopplungsstelle kommt z.B. infrage, wenn durch Ausbrennen gereinigte Umluft über den Kamin abgeblasen werden soll.

Im Ausführungsbeispiel gemäß beiliegender Zeichnung kommen folgende Temperaturen vor: Im Bypass 29 etwa 850 bis 800° C, im Bypass 32 etwa 550 bis 600° C, im Bypass 12 etwa 500° C, im Bypass 13 etwa 120 bis 200° C.

Eventuelle Ausgasungen aus dem Brenngut - auch im Bereich bis 550° C, z. B. bei Polystyrol oder Sägemehl in Poren-Ziegeln - können ausbrennen und zur Energieversorgung des Ofens herangezogen werden. Hierzu wird als Beispiel auf zwei Ausführungen hingewiesen:

(a) In geregelten Zeitabständen werden die Ventilatoren der 500 bis 600° C heiße Luft transportierenden Bypass-Leitungen abgeschaltet. Sofort bildet sich aus zwei Luftkreisläufen ein einziger Luftkreislauf von 850 bis 120° C in der Vorwärmzone und von 120 bis 850° C in der Kühlzone. In diesen großen Luftkreisläufen brennen die ausgeschwelten Gase restlos aus und gelangen zum Kamin.

(b) Ein wenig Frischluft 48 wird im Bereich der Kühlzone 3 über den Einlaß 47 eingeblasen. Es erfolgt sogleich ein stetiger genügender Austausch mit der Luft des Kreislaufs, welcher die Ausgasungen bis an die Brennzone 2 bringt, wo sie restlos ausbrennen. Da die Menge an Frischluft 48 relativ zur Menge der im Kreislauf geführten Umluft sehr klein gehalten werden kann, bleiben die entsprechenden Energieverluste ebenfalls verhältnismäßig klein. Die Abgasmenge am Kamin 41 ist daher beschränkt auf lediglich drei Komponenten, nämlich die Verbrennungsluft an den in der Brennzone 2 vorgesehenen Brennern, die Zuluft der Brenner und/oder Hochgeschwindigkeits-Vergasungsbrenner und eventuell die Frischluft 48, welche auch an anderen Stellen laut Zeichnung eingeblasen werden kann.

Die Temperatur der gedrosselten Abgasmenge ist nur abhängig von der gewählten Stelle des Rauchgasabzugs hin zum Kamin 41 und kann von etwa 120° C an der Einfahrt 4 der Vorwärmzone 1 bis zu 1.000° C oder mehr an der Brennzone 2 steigen. Die wirtschaftlichste Lösung wäre, den Kamin 41 nahe der Ofeneinfahrt 4 vorzusehen, wo die Abgastemperatur am niedrigsten ist.

Da die Abgasmenge der erfindungsgemäßen Vorrichtung nur ein Bruchteil der Abgasmenge von Tunnelöfen nach dem Stand der Technik beträgt, ergeben sich bei Anwendung der Erfindung nicht nur Vorteile betreffend den Energieaufwand sondern auch betreffend die Filteranlage, die der verminderten Abgasmenge entsprechend klein und wenig aufwendig gehalten werden kann.

Wenn der Rauchgasabzug zum Kamin 41 an einer heißeren Stelle des Tunnelofens vorgesehen wird, ist es im allgemeinen günstig, die Wärmeenergie - trotz gedrosselter Abgasmenge - in einem ebenso wie die Filteranlage der relativ geringen Menge des Abgases angepaßten Wärmetauscher zurückzugewinnen.

Der Energieverbrauch eines nach dem beschriebenen Ringluft-Prinzip gesteurten Tunnelofens läßt sich - ohne Berücksichtigung eines gewissen Abstrahlungsverlustes - für den kontinuierlichen Betrieb wie folgt schätzen:

a) Der Energieverbrauch für den eigentlichen Brennprozeß inclusive Kaminverlust und Materialumwandlung beträgt - bei einer Ofenleistung von 10 t/h an ausgefahrenem Brenngut - 10 bis 15 $m^3$ Erdgas/t Brenngut. Das ergibt sich daraus, daß ein 1 $m^3$ Ergas 9.000 WE (Wärmeeinheiten) entspricht, 90 WE/kg Brenngut erforderlich sind und somit für je 100 kg Brenngut 1 $m^3$ Erdgas benötigt wird. Ferner sind zum Verbrennen von 1 $m^3$ Erdgas 10 bis maximal 15 kg Luft erforderlich.

b) Zugleich mit dem eigentlichen Brennprozeß wird elektrische Energie für die Brennerventilatoren, für den Kaminventilator und für die ventilatorbetriebenen Bypässe benötigt. Bei einer Einzelleistung von etwa 25.000 kg Luft/h müssen hierzu bis zu 35 KW elektrischer Leistung installiert werden (eine elektrische Leistung in dieser Größenordnung war bei herkömmlichen Tunnelöfen erforderlich, wenn ein Energieaustausch mit einem parallel geschalteten Trockner vorgesehen wurde).

Wegen der Bypässe und der darin vorgesehenen Ventilatoren ist noch darauf hinzuweisen, daß die Ventilatorleistung und/oder die Bypass-Querschnitte dem mit der Temperatur variierenden Luftvolumen anzupassen sind. Für den Betrieb der erfindungsgemäßen Anordnung wird nämlich im allgemeinen vorgesehen, daß die Bypass-Ventilatoren gewichtsmäßig (und nicht volumenmäßig) gleiche Luftmassen bewegen sollen, damit ein entsprechend kontrolliertes Gleichgewicht zwischen Vorwärm- und Kühlzone dauernd besteht und demgemäß die Brennzone nicht durch einen Luftzug in der einen oder anderen Richtung beansprucht wird. Bei der Bemessung der Ventilatoren und/oder der Bypass-Querschnitte ist zu berücksichtigen, daß 1 kg Luft bei 160° C ein Volumen von etwa 1,25 $m^3$, bei 600° C ein Volumen von etwa 2,5 $m^3$ und bei 850° C ein Volumen von 3,25 $m^3$ besitzt. In der Praxis bedeutet das beispielsweise, daß in derselben Zeit, in der der Bypass 13 mit Ventilator 21 etwa 1 $m^3$ Luft transportiert, der entsprechende Bypass 12 mit Ventilator 17 etwa 2,0 $m^3$ Luft zu fördern hat.

### Bezugszeichenliste

1 = Vorwärmzone
2 = Brennzone
3 = Kühlzone
4 = Einfahrt
5 = Schleuse (4)
6 = Ausfahrt
7 = Schleuse (6)
8 = Transportrichtung
9 = Wagen
10 = äußerer Luftkreislauf
11 = innerer Luftkreislauf
12 = erster Bypass (10)
13 = zweiter Bypass (10)
14 = Eingang (12)
15 = kühlerer Bereich (3)
16 = Quarzsprungzone
17 = Ventilator (12)
18 = Ausgang (12)
19 = kühlerer Bereich (1)
20 = Eingang (13)

21 = Ventilator (13)
22 = Ausgang (13)
23 = Luftstrom (15)
24 = Lufstrom (19)
25 = wärmerer Bereich (3)
26 = wärmerer Bereich (1)
29 = erster Bypass (11)
30 = Eingang (29)
31 = Ausgang (29)
32 = zweiter Bypass (11)
33 = Eingang (32)
34 = Ausgang (32)
35 = Gegenstrom (3)
36 = Gegenstrom (1)
37 = Ventilator (29)
38 = Ventilator (32)
39 = Tunnel
40 = Kaminbereich
41 = Kamin
42 = Rauchgas-Ventilator
43 = Wärmetauscher
44 = Ventilator
45 = Frischluft
46 = Leitung
47 = Frischlufteinlaß
48 = Frischluft

**Ansprüche**

1. Verfahren zum Betrieb eines Durchgangsofens zum Brennen keramischer Formlinge, bei dem die Formlinge als Rohlinge in einer Vorwärmzone (1) aufgeheizt, in einer Brennzone (2) gebrannt und die gebrannten Formlinge in einer Kühlzone (3) im Gegenstrom mit Luft gekühlt werden und bei dem von der Kühlzone (3) stammende erhitzte Luft als Heizmedium in die Vorwärmzone (1) eingebrachte Rohlinge verwendet wird,
**dadurch gekennzeichnet,**
daß bei Anwendung in einem Tunnelofen mit in einer geraden Linie aufeinanderfolgender Vorwärmzone (1), Brennzone (2) und Kühlzone (3) die Brennzone (2) ohne fortdauernde Durchzugsluft als absperrungsfreie Brennkammer betrieben wird.

2. Verfahren nach Anspruch 1,
**dadurch gekennzeichnet,**
daß die im Gegenstrom in der Kühlzone (3) erhitzte Luft vor Eintreffen in der Brennzone (2) aus dem Tunnel (39) abgezogen, über einen ersten Bypass (12, 29) an der Brennzone (2) vorbeigeleitet sowie unmittelbar in die Vorwärmzone (1) eingeblasen und von dort aus nach Abkühlung an den Rohlingen über einen zweiten Bypass (13, 32) wiederum an der Brennzone (2) vorbei zur Kühlzone (3) zurückgeleitet wird.

3. Verfahren nach Anspruch 1 oder 2,
**dadurch gekennzeichnet,**
daß die über den ersten Bypass (12, 29) zur Vorwärmzone (1) geleitete Luft in der Vorwärmzone im Gegenstrom (24, 36) zu den Rohlingen zum Eingang (20, 33) des zweiten Bypasses (13, 32) geleitet wird.

4. Verfahren nach einem der Ansprüche 1 bis 3,
**dadurch gekennzeichnet,**
daß die über den zweiten Bypass (13, 32) von der Vorwärmzone (1) zur Kühlzone (3) geleitete Luft in der Kühlzone im Gegenstrom (23, 35) zu dem Eingang (14, 30) des ersten Bypasses (12, 29) geleitet wird.

5. Verfahren nach einem der Ansprüche 1 bis 4,
**dadurch gekennzeichnet,**
daß in konzentrischen Kreisläufen Luft aus einem kühleren, in Transportrichtung (8) auf die Quarzsprungzone (16) folgenden Bereich (15) der Kühlzone (3) in einen kühleren Eingangsbereich (19) der Vorwärmzone (1) und zurück zu dem kühleren Bereich (15) der Kühlzone (3) geleitet wird und daß zugleich in der Transportrichtung (8) Luft aus einem wärmeren, vor der Quarzsprungzone (16) gelegenen Bereich (25) der Kühlzone (3) in einen an die Brennzone (2) angrenzenden Aufheizbereich (26) der Vorwärmzone (1) und zurück zu dem wärmeren Bereich(25) der Kühlzone (3) geleitet wird.

6. Verfahren nach einem der Ansprüche 1 bis 5, ·
**dadurch gekennzeichnet,**
daß die im Gegenstrom in der Kühlzone (3) erhitzte Luft vor Eintreffen in der Brennzone (2) aus dem Tunnel (39) abgezogen und impulsweise oder periodisch in die Vorwärmzone (1) eingeblasen wird und daß gleichzeitig im gleichen Takt und Umfang die im Gegenstrom in der Vorwärmzone (1) gekühlte Luft aus dem Tunnel (39) abgezogen und impulsweise oder periodisch in die Kühlzone (3) eingeblasen wird.

7. Verfahren nach einem der Ansprüche 1 bis 6,
**dadurch gekennzeichnet,**
daß der jeweilige Luftkreislauf durch die Kühlzone (3) und die Vorwärmzone (1) um die Brennzone (2) herum mit Ventilatorhilfe kontinuierlich und im wesentlichen abgeschlossen von der Umgebungsluft so lange aufrechterhalten wird, bis in der Vorwärmzone (1) ausgeschweltes, brennbares Gas in dem Luftkreis zu einem brennbaren Luft/Gas-Gemisch angereichert ist, und daß dieses Gemisch dann - vorzugsweise unter Hinzufügung von Frischluft - gezündet wird.

8. Verfahren nach einem der Ansprüche 1 bis 7,
**dadurch gekennzeichnet,**
daß die Zündung und gegebenenfalls das Hinzufügen von Frischluft im Kreislaufteil unmittelbar vor oder in der Vorwärmzone (1) erfolgt.

9. Verfahren nach Anspruch 7 oder 8,

**dadurch gekennzeichnet,** .

daß das nach dem Zünden ausgebrannte Gas über den Kamin (41) abgeblasen wird.

10. Durchgangsofen, insbesondere Tunnelofen, zum Brennen keramischer Formlinge, in welchem die Formlinge als Rohlinge in einer Vorwärmzone (1) aufgeheizt und in einer Brennzone (2) gebrannt werden, in welchen die gebrannten Formlinge in einer Kühlzone (3) im Gegenstrom mit Luft gekühlt werden und in welchen von der Kühlzone (3) stammende erhitzte Luft als Heizmedium für in die Vorwärmzone (1) eingebrachte Rohlinge verwendet wird, insbesondere zum Durchführen des Verfahrens nach einem oder mehreren der Ansprüche 1 bis 9,

**gekennzeichnet durch**

wenigstens einen außen um die Brennzone (3) herumgeführten, die Kühlzone (2) und die Vorwärmzone (1) jeweils im Gegenstrom durch fließenden Luftkreislauf (10, 11).

11. Ofen nach Anspruch 10,

**dadurch gekennzeichnet,**

daß jeder Luftkreislauf (10, 11) zwei die Brennzone (2) überbrückende Bypässe (12, 29; 13, 32), nämlich einen von der Kühlzone (3) zur Vorwärmzone (1) führenden ersten Bypass (12, 29) und einen von der Vorwärmzone (1) zur Kühlzone (3) führenden zweiten Bypass (13, 32) besitzt und daß Eingang (14, 30) und Ausgang (18, 31) des ersten Bypasses (12, 29) beide näher an der Brennzone (2) sind als Eingang (20, 33) und Ausgang (22, 34) des zweiten Bypasses (13, 32).

12. Ofen nach Anspruch 10 oder 11,

**dadurch gekennzeichnet,**

daß zwei konzentrische Luftkreisläufe (10, 11) vorgesehen sind, daß der Eingang (14) des äußeren der Luftkreisläufe (10) an einem in Transportrichtung (8) der Formlinge hinter der Quarzsprungzone (16) des gebrannten Materials und der Eingang (30) des inneren dieser Luftkreisläufe (11) an einem in Transportrichtung (8) der Formlinge vor der Quarzsprungzone (16) des gebrannten Materials gelegenen Punkt an einer Wand, insbesondere Seitenwand oder Decke, des Tunnelofens liegt und daß der Ausgang (18) des ersten Bypasses (12) des äußeren der Luftkreisläufe (10) näher als der Ausgang (31) des ersten Bypasses (29) des inneren Luftkreislaufes (11) an der Einfahrt (4) der Vorwärmzone (1) liegt.

13. Ofen nach einem der Ansprüche 10 bis 12,

**dadurch gekennzeichnet,**

daß der erste und zweite Bypass (12, 29; 13, 32) wenigstens eines der Luftkreisläufe (10, 11) jeweils zweifach und etwa spiegelbildlich auf den einander gegen überliegenden Tunnellängswänden, insbesondere wahlweise zu beaufschlagend, vorgesehen sind.

14. Ofen nach einem der Ansprüche 10 bis 13,

**dadurch gekennzeichnet,**

daß an der Einfahrt (4) der Vorwärmzone (1) und an der Ausfahrt (6) der Kühlzone (3) je eine Schleuse (5, 7) vorgesehen ist.

15. Ofen nach einem der Ansprüche 10 bis 14,

**dadurch gekennzeichnet,**

daß ein Kamin (41) mit wahlweise, insbesondere auch bei Betrieb, längs der verschiedenen Zonen (1 bis 3) verschiebbarem Anschluß, vorzugsweise mit schaltbaren Anschlußstellen, vorgesehen ist.